**Europäisches Patentamt**

**European Patent Office**

**Office européen des brevets**

(11) Veröffentlichungsnummer: **0 115 089**
**B1**

(12) **EUROPÄISCHE PATENTSCHRIFT**

(45) Veröffentlichungstag der Patentschrift:
**07.01.87**

(21) Anmeldenummer: **83200151.5**

(22) Anmeldetag: **27.01.83**

(51) Int. Cl.⁴: **H 02 G 5/10**

(54) **Kühlbares elektrisches Bauteil.**

(43) Veröffentlichungstag der Anmeldung:
**08.08.84 Patentblatt 84/32**

(45) Bekanntmachung des Hinweises auf die Patenterteilung:
**07.01.87 Patentblatt 87/2**

(84) Benannte Vertragsstaaten:
**CH DE FR LI**

(56) Entgegenhaltungen:
**EP - A - 0 048 126**
**DE - B - 1 291 003**
**US - A - 3 609 206**

(73) Patentinhaber: **BBC Aktiengesellschaft Brown, Boveri & Cie., Haselstrasse, CH-5401 Baden (CH)**

(72) Erfinder: **Linhofer, Gerhard, Allmendstrasse 33a, CH-5400 Baden (CH)**
Erfinder: **Köppl, Georg, Dipl.-Ing., Waldmatt 14, CH-5242 Birr (CH)**

**Beschreibung**

Die Erfindung betrifft ein kühlbares elektrisches Bauteil gemäss dem Oberbegriff von Patentanspruch 1.

Ein derartiges Bauteil ist etwa aus der US-A-3 609 206 bekannt. Das dort beschriebene kühlbare elektrische Bauteil ist ein Rohrgaskabel mit einem geerdeten und mit einem Isoliergas gefüllten Gehäuse, in dem ein hohlzylindrisch ausgebildeter und auf Hochspannungspotential befindlicher Leiter mittels isolierender Abstandshalter angeordnet ist. Im Inneren des Leiters befindet sich ein sich rohrförmig erstreckendes Gefäss, welches über ein Verbindungsrohr mit dem Ausgang eines Kompressors verbunden ist. In der Wand des Gefässes sind Öffnungen vorgesehen, durch welche aus dem Kompressor zugeführtes und im Gefäss verdampftes Kühlmittel in den zwischen Gefäss und Innenwand des Leiters gelegenen Hohlraum gelangt. Dieses in den Hohlraum verdampfte Kühlmittel entzieht dem Leiter Wärme und wird über ein weiteres Verbindungsrohr in einen dem Kompressor vorgeschalteten Wärmeaustauscher geführt. Ein solches gekühltes elektrisches Bauteil ist jedoch verhältnismässig aufwendig, da es für Isolier- und Kühlzwecke verschiedene Mittel benötigt. Darüber hinaus besteht die Gefahr, dass Kühlmittel in den Raum zwischen Leiter und Gehäuse gelangt und hierbei das Isoliervermögen des Isoliergases wesentlich herabsetzt.

Aus der EP-A-0 048 126 ist ferner ein Rohrgaskabel mit einem geerdeten und mit einem Isoliergas gefüllten Gehäuse bekannt, in dem ein hohlzylindrisch ausgebildeter und auf Hochspannungspotential befindlicher Leiter mittels isolierender Abstandshalter angeordnet ist. Der Leiter weist Durchtrittsöffnungen für in seinem Innenraum sowie im Mantelraum zwischen Gehäuse und Leiter befindliches Isoliergas und mindestens einen Gasauslass auf, durch den das erwärmte Isoliergas aus dem Innenraum des Leiters über einen Isolierstoffzylinder in eine ausserhalb des Gehäuses befindliche Kühlvorrichtung geführt wird. Gekühltes Gas wird durch einen den Isolierstoffzylinder ringförmig umgebenden Kanal in den Mantelraum geführt, wo es zu Zwecken der Kühlung des Leiters zunächst an dessen äusserer Oberfläche und sodann nach Passieren der Durchtrittsöffnungen an dessen innerer Oberfläche bis zur besagten Auslassöffnung entlang geführt wird. Bei diesem Rohrgaskabel kann die Strombelastbarkeit gegenüber einem ungekühlten Kabel gleicher Grösse bei geeigneter Bemessung zwar bis zu 60% erhöht werden, jedoch müssen wegen der verhältnismässig geringen Kühlwirkung des lediglich auf natürliche Weise einer Konvektionsströmung unterworfenen Isoliergases auf einem kurzen Kabelabschnitt zahlreiche Kühlvorrichtungen angebracht und die Innenfläche des Leiters etwa durch Einfräsen von Nuten vergrössert werden. Diese Massnahmen sind nicht nur aufwendig, sondern weisen darüber hinaus aber auch einen unerwünscht grossen Platzbedarf auf.

Die Erfindung wie sie in den Ansprüchen gekennzeichnet ist, löst die Aufgabe, ein gekühltes elektrisches Bauteil der gattungsgemässen Art zu schaffen, welches einfach und betriebssicher aufgebaut ist und sich trotz hoher Strombelastbarkeit durch einen geringen Raumbedarf auszeichnet.

Beim erfindungsgemässen Bauteil kann das Kühlmittel seine Wirkung voll entfalten, da es dem zu kühlenden Leiter sowohl auf der Aussen- als auch auf der Innenseite Wärme entzieht, welche zum Verdampfen von verflüssigtem Isoliergas sowie zum Expandieren und Erwärmen des verdampften Isoliergases benötigt wird. Daher lässt sich trotz geringer Zufuhr von Kühlmittel eine grosse Kühlwirkung und damit eine äusserst hohe Strombelastbarkeit des Bauteils erzielen. Zugleich ist das Bauteil vergleichsweise raumsparend ausgebildet und wegen des sowohl für Kühl- als auch für Isolierzwecke verwendeten Isoliergases äusserst betriebssicher.

Wird das erfindungsgemässe Bauteil gemäss den kennzeichnenden Merkmalen von Patentanspruch 2 weitergebildet, so lässt sich dessen Kühlung in einfacher Weise an unterschiedliche Strombelastungen anpassen.

Bei Ausbildung des erfindungsgemässen Bauteils gemäss den Merkmalen von Patentanspruch 3 ist das Einbringen des Hochdruckbehälters sehr einfach. Dies ist vor allem von Vorteil, wenn der hochspannungsführende Leiter Richtungsänderungen aufweist. Ferner ist dadurch auch eine leicht durchzuführende, nachträgliche Ausrüstung eines Bauteils mit einer Kühlvorrichtung möglich.

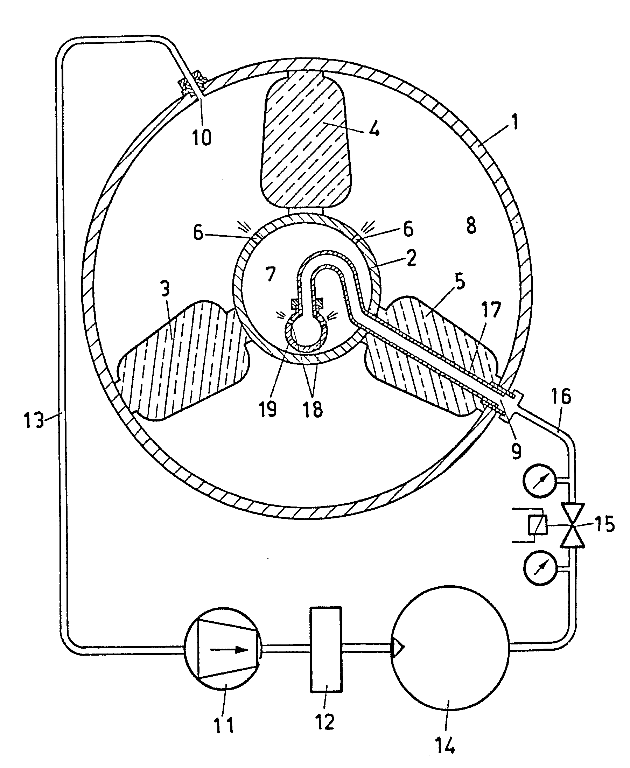

Zur näheren Erläuterung der Erfindung wird im folgenden anhand der Zeichnung ein Ausführungsbeispiel beschrieben.

Hierbei zeigt die einzige Figur eine Aufsicht auf einen senkrecht zur Rohrachse geführten Schnitt durch ein als Rohrgaskabel ausgebildetes erfindungsgemässes Bauteil.

In der Figur ist mit 1 ein im wesentlichen hohlzylindrisch ausgebildetes Gehäuse eines Rohrgaskabels gezeichnet. Dieses Gehäuse kann aus Metall, wie etwa Aluminium oder Stahl, bestehen und geerdet sein, kann aber auch aus einem isolierenden Material, wie etwa Kunststoff, bestehen. Im Inneren des zylindrischen Gehäuses 1 ist ein auf Hochspannungspotential befindlicher und ebenfalls hohlzylindrisch ausgebildeter Leiter 2 koaxial zum Gehäuse 1 auf drei Isolatoren 3, 4 und 5 abgestützt. In der Figur sind zwar nur die Isolatoren 3, 4 und 5 dargestellt, längs der Rohrachse des Rohrgaskabels sind in vorgegebenen Abständen jedoch weitere, in der Figur nicht dargestellte Stützisolatoren sowie ebenfalls nicht dargestellte scheiben- oder trichterförmige Schottungsisolatoren vorgesehen, durch welche nicht nur der Leiter 1 auf dem Gehäuse 2 abgestützt wird, sondern gleichzeitig das Rohrgaskabel längs seiner Rohrachse in gegeneinander gasdicht abgeschottete Räume aufgeteilt wird. Diese von je zwei Schottungsisolatoren und dem Gehäuse 1 begrenzten Schottungsabteile sind mit einem isolierenden Gas, wie etwa Schwefelhexafluorid, gefüllt.

Gehäuse 1 und Leiter 2 weisen Öffnungen auf. Die Öffnungen 6 des Leiters 2 verbinden den Innenraum 7 des Leiters 2 mit einem zwischen Leiter 2 und Gehäuse 1 befindlichen Mantelraum 8, so dass das Isoliergas zwischen diesen Räumen ausgetauscht werden kann. Durch eine Eintrittsöffnung 9 im Gehäuse 1 wird verflüssigtes Isoliergas in ein Schottungsab-

teil eingeführt, während Isoliergas durch eine Austrittsöffnung 10 aus dem Schottungsabteil entfernt wird.

Ausserhalb des Gehäuses 1 ist eine einen Kompressor 11 und einen Kühler 12 enthaltende Gasverflüssigungsanlage vorgesehen. Der Eingang der Gasverflüssigungsanlage ist über eine an der Austrittsöffnung 10 endende Rohrleitung 13 mit dem Mantelraum 8 verbunden. Der Ausgang der Gasverflüssigungsanlage ist hingegen über einen Speicherbehälter 14, ein Dosierventil 15 und eine an der Eintrittsöffnung 9 endende Rohrleitung 16 sowie eine Rohrleitung 17 aus isolierendem Material und einen Austrittsöffnungen 18 aufweisenden und sich in Längsrichtung des Leiters 2 erstreckenden Hochdruckbehälter 19 mit dem Innenraum 7 des Leiters 2 verbunden.

Die Rohrleitung 17 weist ein den Mantelraum 8 überbrückendes Isolierstoffteil auf, welches den auf Hochspannungspotential befindlichen Leiter 2 gegenüber dem Gehäuse 1 elektrisch isoliert. Das Isolierstoffteil kann beispielsweise der Isolator selbst sein, in dem eine Bohrung vorgesehen ist, welche die Eintrittsöffnung 9 mit dem Innenraum 7 in dichtender Weise verbindet, es kann aber auch — wie in der Figur dargestellt ist — ein durch eine Bohrung im Isolator 5 geführtes isolierendes Teil der Rohrleitung 17 sein. Die Rohrleitung 17 kann starr (Rohr) oder flexibel (Schlauch) ausgebildet sein.

Auch der Hochdruckbehälter 19 kann als Rohr oder Schlauch ausgebildet sein. Seine Bruchteile von Millimeter breiten Austrittsöffnungen 18 sind vorzugsweise in regelmässigen Abständen in die Rohr- oder Schlauchwand einperforiert. Ist der Hochdruckbehälter 19 als Rohr ausgebildet, so kann er vorzugsweise aus Metall bestehen. Er weist dann den Vorteil einer guten Wärmeverteilung längs seiner Rohrachse und eine hohe mechanische Festigkeit auf. Ist der Hochdruckbehälter 19 als Schlauch ausgebildet, so kann er aus einem kältebeständigen Kunststoff auf der Basis von Silikonkunststoffen oder aus Metall bestehen. Ein derartiger Hochdruckbehälter weist nur geringe Wärmeverluste auf und kann daher einen verhältnismässig geringen Durchmesser haben.

Die Wirkung der vorstehend beschriebenen Vorrichtung ist nun wie folgt:
Aus dem Mantelraum 1 durch die Austrittsöffnung 10 abströmendes erwärmtes Isoliergas wird über die Rohrleitung 13 in die Gasverflüssigungsanlage gesaugt, wo es im Kompressor 11 verdichtet und das verdichtete Isoliergas in dem dem Kompressor 11 nachgeschalteten Kühler 12 verflüssigt wird. Das verflüssigte Isoliergas wird in den mit einem nicht bezeichneten Rückschlagventil versehenen Speicherbehälter 14 gepumpt, in dem es sich unter dem Einfluss der Aussentemperatur stehend erwärmt und Hochdruck aufbaut (bei ca. 20°C Umgebungstemperatur und Schwefelhexafluorid als Isoliergas ca. 40 bar). Der im Speicherbehälter 14 herrschende hohe Druck treibt das erwärmte verflüssigte Isoliergas über das Dosierventil 15 und die Rohrleitungen 16 und 17 in den Hochdruckbehälter 19, aus dessen Austrittsöffnungen 18 es in den lediglich einen Gasdruck von ca. 4 bar aufweisenden Innenraum 7 strömt. Hierbei verdampft das verflüssigte Isoliergas und entzieht dem Innenraum 7 Wärme. Gegebenenfalls mitaustretendes gasförmiges Isoliermittel hohen Drucks kühlt sich beim Expandieren in den Innenraum 7 ab und entzieht demselben hierbei ebenfalls Wärme. Das kühle Isoliergas erwärmt sich und strömt wegen des sich im Innenraum 7 ausbildenden leichten Überdrucks durch die Öffnungen 6 in den Mantelraum 8 ab, von wo es über die Austrittsöffnung 10 und die Rohrleitung 13 wieder zur Gasverflüssigungsanlage gelangt. Eine besonders günstige Ausnützung der Kühlwirkung des Isoliergases wird dann erreicht, wenn die Öffnungen 6 an den Stirnseiten der Schottungsräume im Bereich der Schottungsisolatoren angebracht sind, und wenn die Austrittsöffnung 10 sich etwa gleich weit von beiden Enden des Schottungsraumes entfernt befindet, da dann das kühle Isoliergas an der gesamten Innen- und Aussenfläche des Leiters 2 entlangströmt und somit seine volle Kühlwirkung entfaltet.

Die Erfindung ist nicht auf Rohrgaskabel als Bauteile beschränkt, sie bezieht sich vielmehr auf alle elektrischen Bauteile mit einem Gehäuse, in dem ein auf Hochspannungspotential befindlicher Leiter vorgesehen ist, wie etwa Leistungs- und Trennschalter von gasisolierten, metallgekapselten Schaltanlagen.

**Patentansprüche**

1. Kühlbares elektrisches Bauteil mit
— einem isoliergasgefüllten Gehäuse (1), an dessen Wandung mindestens zwei Gehäuseöffnungen vorgesehen sind, von denen mindestens eine erste (9) als Einlass und mindestens eine zweite (10) als Auslass von Kühlmittel dient,
— einem im Gehäuse (1) angeordneten hohlzylindrisch ausgebildeten und auf Hochspannungspotential befindlichen Leiter (2), an dessen Wandung mindestens zwei Leiteröffnungen vorgesehen sind, von denen mindestens eine erste als Einlass und mindestens eine zweite (6) als Auslass des Kühlmittels dient, und
— einem im Innenraum (7) des Leiters (2) befindlichen und sich in dessen Längsrichtung erstreckenden Hochdruckbehälter (19) mit einem Eingang, welcher über die mindestens eine erste Gehäuseöffnung (9) und die mindestens eine erste Leiteröffnung mit dem Ausgang einer im geschlossenen Kreislauf arbeitenden Gasverflüssigungsanlage verbunden ist, und mit Austrittsöffnungen (18), durch welche von der Gasverflüssigungsanlage zugeführtes Kühlmittel in den Innenraum (7) des Leiters (2) tritt und nach Verdampfung von dort über die mindestens eine zweite Leiteröffnung (6) und die mindestens eine zweite Gehäuseöffnung (10) einem Eingang der Gasverflüssigungsanlage zugeführt wird,
dadurch gekennzeichnet,
— dass mindestens zwei gegeneinander in Längsrichtung des Leiters (2) versetzt angeordnete zweite Leiteröffnungen (6) vorgesehen sind, welche das im Innenraum (7) des Leiters (2) gebildete Isoliergas in den Mantelraum (8) zwischen Leiter (2) und Gehäuse (1) leiten, derart, dass Isoliergas im Gehäuse (1) von verdampftem Kühlmittel gebildet wird, und

— dass das in den Mantelraum (8) geleitete Isoliergas über die mindestens eine zweite Gehäuseöffnung (10) zum Eingang der Gasverflüssigungsanlage geleitet wird.

2. Bauteil nach Anspruch 1, dadurch gekennzeichnet, dass der Gasverflüssigungsanlage ein über ein Dosierventil (15) mit dem Innenraum (7) des Leiters (2) verbundener Speicherbehälter (14) nachgeschaltet ist.

3. Bauteil nach Anspruch 1, dadurch gekennzeichnet, dass der Hochdruckbehälter (19) als aus einem kältebeständigen Kunststoff auf der Basis von Silikonharzen bestehender Schlauch ausgebildet ist.

## Claims

1. Electrical component which can be cooled, having
— a housing (1) which is filled with an insulating gas and on the walls of which at least two housing apertures are provided, of which at least a first (9) serves as an inlet and at least a second (10) serves as an outlet for coolant,
— a conductor (2) which is of hollow-cylindrical shape, is arranged in the housing (1) and is at high-tension potential and on the wall of which at least two conductor apertures are provided, of which at least a first serves as an inlet and at least a second (6) serves as an outlet for coolant, and
— a high-Pressure vessel (19) located in the interior (7) of the conductor (2) and extending in the longitudinal direction thereof and having an inlet, which is connected via the first housing aperture (9), of which there is at least one, and the first conductor aperture, of which there is at least one, to the outlet of a gas liquefaction unit operating in a closed circuit, and outlet apertures (18) through which coolant fed from the gas liquefaction unit passes into the interior (7) of the conductor (2) and, after vaporization, is fed from there via the second conductor aperture (6), of which there is at least one, and the second housing aperture (10), of which there is at least one, to an inlet of the gas liquefaction unit, characterized in that
— at least two second conductor apertures (6) are provided which are arranged with a mutual offset in the longitudinal direction of the conductor (2) and which pass the insulating gas formed in the interior (7) of the conductor (2) into the shell space (8) between the conductor (2) and the housing (1), in such a way that insulating gas is formed in the housing (1) from vaporized coolant, and
— that the insulating gas passed into the shell space (8) is passed via the second housing aperture (10), of which there is at least one, to the inlet of the gas liquefaction unit.

2. Component according to Claim 1, characterized in that a storage vessel (14), connected via a control valve (15) to the interior (7) of the conductor (2), is provided downstream of the gas liquefaction unit.

3. Component according to Claim 1, characterized in that the high-pressure vessel (19) is made in the form of tubing which consists of a cold-resistant plastic based on silicone resins.

## Revendications

1. Composant électrique refroidi comportant:
— une enveloppe (1) remplie de gaz isolant dans la paroi de laquelle sont prévus au moins deux orifices d'enveloppe, dont au moins un premier (9) sert d'orifice d'admission et au moins un second (10) sert d'orifice d'évacuation d'agent de refroidissement,
— un conducteur (2) de forme cylindrique creuse disposé dans l'enveloppe (1) et se trouvant au potentiel de la haute tension, dans la paroi duquel sont prévus au moins deux orifices de conducteur dont au moins un premier sert d'orifice d'admission et au moins un second (6) sert d'orifice d'évacuation de l'agent de refroidissement, et
— un récipient à haute pression (19) disposé dans l'espace intérieur (7) du conducteur (2) et s'étendant dans le sens longitudinal de celui-ci, avec une entrée qui est raccordée, par l'intermédiaire du ou des premiers orifices d'enveloppe (9) et du ou des premiers orifices de conducteur, à la sortie d'une installation de liquéfaction de gaz travaillant en circuit fermé, et avec des orifices de sortie (18) par lesquels de l'agent de refroidissement amené par l'installation de liquéfaction de gaz pénètre dans l'espace intérieur (7) du conducteur (2) et, après vaporisation, est amené de là, par l'intermédiaire du ou des seconds orifices de conducteur (6) et du ou des seconds orifices d'enveloppe (10), è une entrée de l'installation de liquéfaction de gaz, caractérisé en ce que,
— au moins deux seconds orifices de conducteur (6), décalés l'un par rapport à l'autre dans le sens longitudinal du conducteur (2), sont prévus et conduisent le gaz isolant formé dans l'espace intérieur (7) du conducteur (2) dans l'espace périphérique (8) entre le conducteur (2) et l'enveloppe (1) de façon que le gaz isolant dans l'enveloppe (1) soit constitué par de l'agent de refroidissement vaporisé, et
— le gaz isolant conduit dans l'espace périphérique (8) par l'intermédiaire du ou des seconds orifices d'enveloppe (10) est amené à l'entrée de l'installation de liquéfaction de gaz.

2. Composant suivant la revendication 1, caractérisé en ce que l'installation de liquéfaction de gaz est suivie d'un réservoir de stockage (14) raccordé par l'intermédiaire d'une valve doseuse (15) à l'espace intérieur (7) du conducteur (2).

3. Composant suivant la revendication 1, caractérisé en ce que le réservoir à haute pression (19) est réalisé sous la forme d'un tuyau flexible fait d'une matière plastique résistant au froid à base de résines de silicone.